# EUROPEAN PATENT SPECIFICATION

(11) **EP 4 149 803 B1**
(45) Date of publication and mention of the grant of the patent: **20.03.2024**
(21) Application number: 21728119.5
(22) Date of filing: 05.05.2021
(51) Int. Cl.: B60T 7/20, B60T 13/66, B60T 13/68, B60T 7/12

(54) **APPARATUS FOR THE BRAKING PROCESS OF A VEHICLE WITH A TRAILER**
GERÄT FÜR DAS BREMSENVERFAHREN EINES FAHRZEUGS MIT ANHÄNGER
APPAREIL POUR LE PROCÉDÉ DE FREINAGE D'UN VÉHICULE AVEC REMORQUE

(30) Priority: 14.05.2020 IT 202000011059
(43) Date of publication of application: 22.03.2023
(73) Proprietor: Same Deutz-Fahr Italia S.p.A., 24047 Treviglio Bergamo (IT)
(72) Inventor: FRIGNATI, Davide, 24047 Treviglio, Bergamo (IT); BAUR, Wolfgang Richard, 24047 Treviglio, Bergamo (IT); MÜLLER, Jörg Georg, 24047 Treviglio, Bergamo (IT); BURRONI, Emanuele, 24047 Treviglio, Bergamo (IT); CREMONESI, Carlo, 24047 Treviglio, Bergamo (IT); BASSANI, Marco, 24047 Treviglio, Bergamo (IT)
(74) Representative: Pulieri, Gianluca Antonio
(86) International application number: PCT/IB2021/053790
(87) International publication number: WO 2021/229370

(56) References cited:
- EP-A1- 2 269 880
- EP-A2- 3 216 333
- DE-A1-102016 012 925
- US-A1- 2014 343 813
- US-A1- 2016 332 606

## Description

### Field of the invention

The present invention pertains to the field of farm vehicles, and in particular to the field of apparatuses for the braking process of vehicles consisting of a tractor and one or more trailers.

### Background art

The need is strongly felt in such a field to provide braking apparatuses provided with specific control systems which take into consideration the presence of the trailers, which obviously have a considerable impact on the braking performance of the entire vehicle. There are several apparatuses for the braking process of vehicles with a trailer.

For example, some solutions are disclosed in documents WO-A1-2018/077470, WO-A1-2016/192855, WO-A1-2015/104168 (and US 2016/332606 A1 belonging to the same family), EP2123528, WO-A1-2008/141740 and EP1800982.

### Object of the invention

It is the object of the present invention to provide a further apparatus for the braking process of vehicles with a trailer, the control system of which is particularly effective.

Such an object is achieved by an apparatus for the braking process of a vehicle with a trailer according to claim 1 and a method according to claim 3. The dependent claims describe further advantageous embodiments of the invention.

### Brief description of the drawings

The features and advantages of the braking apparatus according to the present invention will become apparent from the following description, given by way of nonlimiting example, according to the accompanying drawings, in which:
- Figure 1 diagrammatically shows a vehicle with tractor and trailer, according to an embodiment of the present invention;

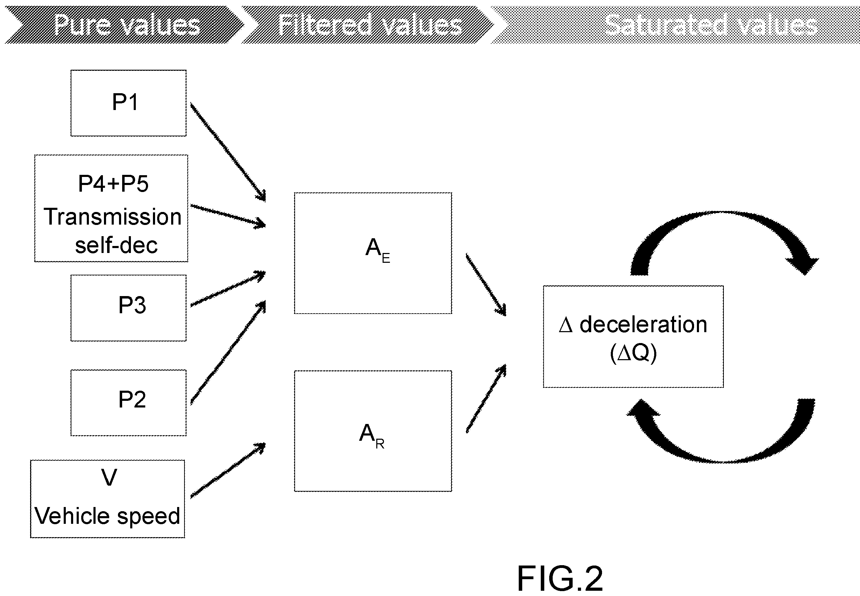

- Figure 2 shows a diagram of the method for managing the braking process according to the present invention.

### Description of an embodiment

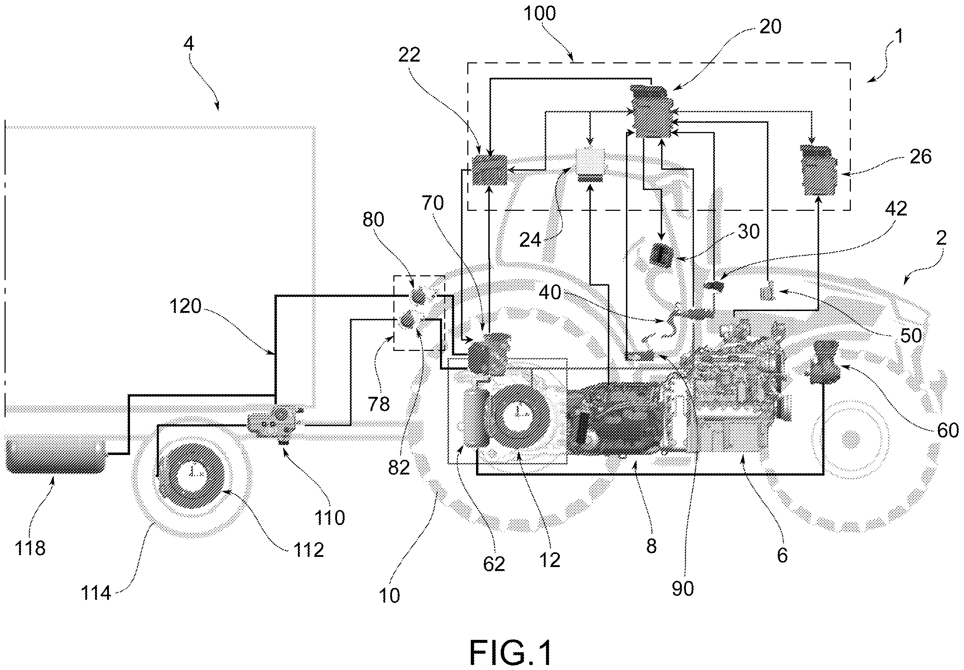

With reference to accompanying Figure 1, a vehicle 1 consists of a tractor 2 and at least one trailer 4, which is operatively connected to tractor 2 to be dragged by the latter.

Tractor 2 comprises an internal combustion engine 6 and a gearbox assembly 8 connected to engine 6 and to the rear wheel axle 10 of tractor 2 to actuate it in rotation.

Tractor 2 further comprises electronic management means 100 for managing the braking process of the tractor and the trailer. Said management means 100 comprise vehicle control means 20, trailer braking control means 22, gearbox control means 24 and engine control means 26, all operatively connected to the vehicle control means 20. The vehicle control means 20 operate as masters with respect to the other control means 22, 24, 26, which operate as slaves.

A braking apparatus according to the present invention comprises a tractor brake system and a trailer brake system.

Tractor 2 comprises the tractor brake system, comprising a brake 12 applied to each wheel 10, for example to the hub thereof, which is adapted to apply a braking action to said wheel 10. The tractor brake system further comprises a brake assembly 40, comprising at least one brake pedal which may be actuated by a driver sitting in the driving cabin, a brake pump which may be actuated by the brake pedal and is operatively connected to each brake 12, and a brake sensor adapted to detect the actuation of the brake pedal, as well as a braking pressure sensor 42 for detecting and signaling the braking pressure applied by the brake pump.

According to one embodiment variant, the brake assembly 40 comprises a right brake pedal and a left brake pedal for the braking process of the right wheels alone and of the left wheels alone, respectively.

The brake sensor is operatively connected to the management means 100, and in particular to the vehicle control means 20, in order to signal the actuation of the brake pedal. Moreover, the braking pressure sensor 42 is operatively connected to the management means 100, and in particular to the vehicle control means 20, in order to signal the amount of the pressure generated by the actuation of the pump.

Tractor 2 further comprises a trailer brake device comprising a hydraulic or pneumatic trailer pump 60 for the braking process of the trailer, preferably a main trailer tank 62 for storing pressurized oil or air, fed by the trailer pump 60, and a trailer brake master valve 70 supplied by means of the main trailer pump 60 and/or the main trailer tank 62, which is controlled by the brake assembly 12 and is operatively connected to the management means 100, and in particular to the trailer braking control means 22.

The trailer brake device further comprises a trailer interface 78 for the hydraulic or pneumatic connection with trailer 4. In particular, the trailer interface 78 comprises a power socket 80 connected to the trailer brake master valve 70 for supplying pressurized oil or air to actuate the trailer brakes, and a signal socket 82 connected to the trailer brake master valve 70 for sending a hydraulic or pneumatic control signal for the braking process.

Moreover, tractor 2 preferably comprises a clinometer 50 for detecting the inclination of the tractor due to the slope of the road surface on which the tractor is traveling. The clinometer 50 is operatively connected to the management means 100, and in particular to the vehicle control means 20.

Moreover, tractor 2 preferably comprises a display 30 for providing the driver with information, which is preferably located in the driving cabin of the tractor. Display 30 is operatively connected to the management means 100, and in particular to the vehicle control means 20.

Finally, tractor 2 further comprises an accelerator 90 for the acceleration of the vehicle. Accelerator 90 is also operatively connected to the management means 100, and in particular to the vehicle control means 20.

According to one embodiment variant, accelerator 90 comprises an accelerator pedal which may be foot-operated by the driver and/or an accelerator knob which may be hand-operated by the driver.

Trailer 4 comprises a trailer brake system which may be connected to the trailer interface 78, comprising a secondary trailer brake valve 110 operatively connected to the power socket 80 by means of a trailer brake circuit 120 and to the signal socket 82, a trailer brake 112 applied to each wheel 114 of trailer 4, for example to the hub thereof, adapted to apply a braking action to said wheel 114, operatively connected to the secondary trailer brake valve 110, and preferably a secondary trailer tank 118 for storing pressurized oil or air for the trailer brake circuit. For example, the secondary trailer tank 118 is connected to the trailer brake circuit 120.

According to the invention, the management means 100, and the gearbox control means 24 in particular, are configured to detect the actual deceleration a_{R} for the vehicle on the basis of the longitudinal speed, for example on the basis of the rotation speed of the rear axle.

Moreover, the management means 100 are configured to calculate an expected deceleration a_{E} for the vehicle on the basis of parameters P, and a difference Δa between the expected deceleration and the actual deceleration (Δa = a_{E} - a_{R}) ; said management means 100, and the trailer braking management means 22 in particular, are also configured to bias the braking action of the trailer so as to reduce said difference Δa.

In particular, the expected deceleration is calculated on the basis of the following parameters P:
P1) mechanical features of the trailer braking system (such as, for example, type of brake, diameter of the brake discs, type of pads);
P2) pressure of the fluid in the tractor brake system, preferably detected by the braking pressure sensor 42;
P3) inclination of the tractor, preferably detected by the clinometer 50;
P4) action applied by the inertia of the engine (engine brake);
P5) mechanical features of the tractor (such as, for example diameter of the wheels, mass of the tractor), torque exerted by the idle engine (calculated on the basis of the power absorbed by the auxiliary devices connected to the engine - alternator, compressor, hydraulic pumps, fan - under inactive machine conditions, also with transmission engaged), state of the "trailer stretch" mode (only for CVT transmissions; this is a mode which allows the drive ratio which is blocked - while usually it would vary - to be acted on to allow the braking process and traction to co-exist to keep the train drawn); status of the "over performance" mode (only CVT transmissions; this is a mode which allows the gradient of variation of transmission ratio to be intensified during the deceleration). Both the "trailer stretch" and "over performance" parameters apply a fixed offset to the desired deceleration.

The parameters P preferably are used according to the instantaneous value (pure values), while the expected deceleration as and/or the actual deceleration a_{R} are filtered so as to mitigate the effects of an oscillation which is too quick (filtered values).

By way of example, consider a vehicle travelling along a downhill road. When the driver actuates the brakes, the management means detect the actual deceleration, which obviously is affected by the thrust action of the trailer on the tractor and therefore is less intense than what the driver is expecting, they compare it with the expected deceleration and work on the braking process of the trailer, for example intensifying it, to ensure the pulling action on the tractor results in the vehicle decelerating, as expected by the driver.

Innovatively, the braking apparatus according to the present invention meets the needs of the sector and, in particular, allows the vehicle to have a braking process similar to the one expected by the driver for the tractor alone.

It is clear that, in order to meet contingent needs, those skilled in the art may make changes to the braking apparatus described above, all contained within the scope of protection as defined by the following claims.

## Claims

1. A vehicle (1) consisting of a tractor (2) and at least one trailer (4) that is mechanically connected to the tractor (2) in order to be dragged in motion, wherein:
- the tractor (2) comprises an engine (6), tractor wheels (10), at least one tractor brake (12), which may be actuated in order to brake a particular tractor wheel (10), a brake assembly (40), which is provided with a brake pedal in order to actuate the tractor brake (12) to brake, a trailer brake master valve (70), which is operatively connected to the brake assembly (40), and an accelerator (90) that is operatively connected to the engine (6);
- the tractor (2) further comprises electronic management means (100) comprising trailer braking management means (22) and engine management means (26), said management means (100) being operatively connected to the trailer brake master valve (70), to the brake assembly (40) and to the engine (6);
- the trailer (4) comprises trailer wheels (114) and at least one trailer brake (112) that may be actuated in order to brake a particular trailer wheel (114), wherein the trailer brake (112) is operatively connected to the trailer brake master valve (70) of the tractor (2) by means of a trailer brake circuit (120) and may be actuated when the pressure in the trailer brake circuit (120) is equal to, or greater than a braking pressure (Pb);
- wherein the management means (100) are configured to detect an actual deceleration (a_{R}) for the vehicle, to calculate an expected deceleration (a_{E}) for the vehicle and a difference (Δa) between the expected deceleration and the actual deceleration (Δa = a_{E} - a_{R}), and to control the trailer brake master valve (70) so as to modify the pressure in the trailer brake circuit (120) in order to minimize said difference (Δa);
**characterised in that**
the tractor comprises a braking pressure sensor (42) that is applied to the brake assembly (40) in order to detect a braking pressure of the tractor and is operatively connected to the management means (100), and said management means (100) are designed to calculate the expected deceleration (a_{E}) on the basis of said braking pressure of the tractor.

2. The vehicle according to claim 1, wherein the tractor comprises a clinometer (50) for detecting the inclination of the tractor, operatively connected to the management means (100), and said management means (100) are designed to calculate the expected deceleration (a_{E}) on the basis of said inclination of the tractor.

3. A method for managing a braking process of a vehicle that consists of a tractor (2), which is provided with an engine (6) and a brake pedal, and with at least one trailer (4) that is provided with a trailer brake (112), said method comprising the steps of:
- detecting an actual deceleration (a_{R}) for the vehicle, calculating an expected deceleration (a_{E}) for the vehicle and a difference (Δa) between the expected deceleration and the actual deceleration (Δa = a_{E} - a_{R}); **characterised by**
- modifying the braking pressure of the trailer brake (112) of the trailer in order to minimize said difference (Δa); wherein the expected deceleration (a_{E}) is calculated on the basis of a braking pressure of the tractor brake (12).

4. The method according to claim 3, wherein the expected deceleration (a_{E}) is calculated on the basis of an inclination detected for the tractor.

## Patentansprüche

1. Fahrzeug (1), bestehend aus einem Traktor (2) und mindestens einem Anhänger (4), der mit dem Traktor (2) mechanisch verbunden ist, um in Bewegung gezogen zu werden, wobei:
- der Traktor (2) einen Motor (6), Traktorräder (10), mindestens eine Traktorbremse (12), die betätigt werden kann, um ein bestimmtes Traktorrad (10) zu bremsen, eine Bremsenbaugruppe (40), die mit einem Bremspedal versehen ist, um die Traktorbremse (12) zum Bremsen zu betätigen, ein Anhängerbremsen-Hauptventil (70), das mit der Bremsenbaugruppe (40) betriebswirksam verbunden ist, und ein Gaspedal (90), das mit dem Motor (6) betriebswirksam verbunden ist, umfasst;
- der Traktor (2) ferner elektronische Verwaltungsmittel (100) umfasst, die Anhängerbremsen-Verwaltungsmittel (22) und Motorverwaltungsmittel (26) umfassen, wobei die Verwaltungsmittel (100) mit dem Anhängerbremsen-Hauptventil (70), mit der Bremsenbaugruppe (40) und mit dem Motor (6) betriebswirksam verbunden sind;
- der Anhänger (4) Anhängerräder (114) und mindestens eine Anhängerbremse (112) umfasst, die betätigt werden kann, um ein bestimmtes Anhängerrad (114) zu bremsen, wobei die Anhängerbremse (112) mittels eines Anhängerbremskreises (120) mit dem Anhängerbremsen-Hauptventil (70) des Traktors (2) betriebswirksam verbunden ist und betätigt werden kann, wenn der Druck in dem Anhängerbremskreis (120) gleich oder größer als ein Bremsdruck (Pb) ist;
- wobei die Verwaltungsmittel (100) konfiguriert sind, eine tatsächliche Verzögerung (a_{R}) für das Fahrzeug zu detektieren, eine erwartete Verzögerung (a_{E}) für das Fahrzeug und eine Differenz (Δa) zwischen der erwarteten Verzögerung und der tatsächlichen Verzögerung (Δa = a_{E} - a_{R}) zu berechnen und das Anhängerbremsen-Hauptventil (70) so zu steuern, dass der Druck in dem Anhängerbremskreis (120) modifiziert wird, um die Differenz (Δa) zu minimieren;
**dadurch gekennzeichnet, dass**
der Traktor einen Bremsdrucksensor (42) umfasst, der auf die Bremsenbaugruppe (40) aufgebracht ist, um einen Bremsdruck des Traktors zu detektieren, und mit den Verwaltungsmitteln (100) betriebswirksam verbunden ist, und
die Verwaltungsmittel (100) ausgelegt sind, die erwartete Verzögerung (a_{E}) auf der Grundlage des Bremsdrucks des Traktors zu berechnen.

2. Fahrzeug nach Anspruch 1, wobei der Traktor einen Neigungsmesser (50) zum Detektieren der Neigung des Traktors umfasst, der mit den Verwaltungsmitteln (100) betriebswirksam verbunden ist, und die Verwaltungsmittel (100) ausgelegt sind, die erwartete Verzögerung (a_{E}) auf der Grundlage der Neigung des Traktors zu berechnen.

3. Verfahren zur Verwaltung eines Bremsenverfahrens eines Fahrzeugs, das aus einem Traktor (2), der mit einem Motor (6) und einem Bremspedal versehen ist, und mit mindestens einem Anhänger (4), der mit einer Anhängerbremse (112) versehen ist, besteht, wobei das Verfahren die Schritte umfasst:
- Detektieren einer tatsächlichen Verzögerung (a_{R}) für das Fahrzeug, Berechnen einer erwarteten Verzögerung (a_{E}) für das Fahrzeug und einer Differenz (Δa) zwischen der erwarteten Verzögerung und der tatsächlichen Verzögerung (Δa = a_{E} - a_{R}); **gekennzeichnet durch**
- Modifizieren des Bremsdrucks der Anhängerbremse (112) des Anhängers, um die Differenz (Δa) zu minimieren;
wobei die erwartete Verzögerung (a_{E}) auf der Grundlage eines Bremsdrucks der Traktorbremse (12) berechnet wird.

4. Verfahren nach Anspruch 3, wobei die erwartete Verzögerung (a_{E}) auf der Grundlage einer für den Traktor detektierten Neigung berechnet wird.

## Revendications

1. Véhicule (1) consistant en un tracteur (2) et au moins une remorque (4) qui est reliée mécaniquement au tracteur (2) afin d'être tirée en mouvement, dans lequel :
- le tracteur (2) comprend un moteur (6), des roues de tracteur (10), au moins un frein de tracteur (12), qui peut être actionné afin de freiner une roue de tracteur (10) particulière, un ensemble de frein (40), qui est doté d'une pédale de frein afin d'actionner le frein de tracteur (12) pour freiner, une valve principale de frein de remorque (70), qui est reliée fonctionnellement à l'ensemble de frein (40), et un accélérateur (90) qui est relié fonctionnellement au moteur (6) ;
- le tracteur (2) comprend en outre des moyens de gestion (100) électroniques comprenant des moyens de gestion de freinage de remorque (22) et des moyens de gestion de moteur (26), lesdits moyens de gestion (100) étant reliés fonctionnellement à la valve principale de frein de remorque (70), à l'ensemble de frein (40) et au moteur (6) ;
- la remorque (4) comprend des roues de remorque (114) et au moins un frein de remorque (112) qui peut être actionné afin de freiner une roue de remorque (114) particulière, dans lequel le frein de remorque (112) est relié fonctionnellement à la valve principale de frein de remorque (70) du tracteur (2) au moyen d'un circuit de frein de remorque (120) et peut être actionné lorsque la pression dans le circuit de frein de remorque (120) est égale ou supérieure à une pression de freinage (Pb) ;
- dans lequel les moyens de gestion (100) sont configurés pour détecter une décélération réelle (a_{R}) pour le véhicule, pour calculer une décélération attendue (a_{E}) pour le véhicule et une différence (Δa) entre la décélération attendue et la décélération réelle (Δa = a_{E} - a_{R}), et pour commander la valve principale de frein de remorque (70) de manière à modifier la pression dans le circuit de frein de remorque (120) afin de réduire au minimum ladite différence (Δa) ;
**caractérisé en ce que**
le tracteur comprend un capteur de pression de freinage (42) qui est appliqué à l'ensemble de frein (40) afin de détecter une pression de freinage du tracteur et est relié fonctionnellement aux moyens de gestion (100), et lesdits moyens de gestion (100) sont conçus pour calculer la décélération attendue (a_{E}) sur la base de ladite pression de freinage du tracteur.

2. Véhicule selon la revendication 1, dans lequel le tracteur comprend un clinomètre (50) pour détecter l'inclinaison du tracteur, relié fonctionnellement aux moyens de gestion (100), et lesdits moyens de gestion (100) sont conçus pour calculer la décélération attendue (a_{E}) sur la base de ladite inclinaison du tracteur.

3. Procédé pour gérer un procédé de freinage d'un véhicule qui consiste en un tracteur (2), qui est doté d'un moteur (6) et d'une pédale de frein, et avec au moins une remorque (4) qui est dotée d'un frein de remorque (112), ledit procédé comprenant les étapes consistant à :
- détecter une décélération réelle (a_{R}) pour le véhicule, calculer une décélération attendue (a_{E}) pour le véhicule et une différence (Δa) entre la décélération attendue et la décélération réelle (Δa = a_{E} - a_{R}) ; **caractérisé par**
- la modification de la pression de freinage du frein de remorque (112) de la remorque afin de réduire au minimum ladite différence (Δa) ;
dans lequel la décélération attendue (a_{E}) est calculée sur la base d'une pression de freinage du frein de tracteur (12).

4. Procédé selon la revendication 3, dans lequel la décélération attendue (a_{E}) est calculée sur la base d'une inclinaison détectée pour le tracteur.
